(19) **Europäisches Patentamt**
**European Patent Office**
**Office européen des brevets**

(11) **EP 1 836 139 B1**

(12) **FASCICULE DE BREVET EUROPEEN**

(45) Date de publication et mention
de la délivrance du brevet:
**25.08.2010 Bulletin 2010/34**

(21) Numéro de dépôt: **05824418.7**

(22) Date de dépôt: **06.12.2005**

(51) Int Cl.:
*C03C 17/34* ^(2006.01)

(86) Numéro de dépôt international:
**PCT/FR2005/051044**

(87) Numéro de publication internationale:
**WO 2006/061541 (15.06.2006 Gazette 2006/24)**

(54) **STRUCTURE DECOREE ET A COUCHE ET SA FABRICATION**

VERZIERTE SCHICHTSTRUKTUR UND HERSTELLUNG DAVON

DECORATED LAYER STRUCTURE AND THE PRODUCTION THEREOF

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.12.2004 FR 0452875**

(43) Date de publication de la demande:
**26.09.2007 Bulletin 2007/39**

(73) Titulaire: **SAINT-GOBAIN GLASS FRANCE
92400 Courbevoie (FR)**

(72) Inventeurs:
• **MENNECHEZ, Francoise
F-75010 Paris (FR)**

• **ODILE, Jean-Pierre
F-77510 Villeneuve Sur Bellot (FR)**
• **BOUSQUET, Virginie
F-02400 Nogentel (FR)**

(74) Mandataire: **Cardin, Elise
Département de la Propriété Industrielle
Saint-Gobain Recherche
39, quai Lucien Lefranc
93300 Aubervilliers Cedex (FR)**

(56) Documents cités:
**WO-A-00/55655        WO-A-93/13027
DE-B3- 10 344 442      US-A- 2 624 823
US-A- 3 510 343        US-A- 4 975 301
US-A- 4 983 196        US-A- 5 043 186
US-A- 5 480 722**

**Description**

La présente invention concerne le domaine des structures décorées et plus particulièrement se rapporte à une structure décorée et à couche et à son procédé de fabrication.

Dans la plupart des applications connues utilisant le verre décoré, le décor est destiné à être vu à travers l'épaisseur du verre. On utilise ainsi un verre décoré par un émail par exemple blanc comme façade de radiateur. Ce verre décoré est assemblé avec un corps de chauffe supplémentaire de préférence sous forme d'un verre revêtu d'une couche électriquement conductrice présentant une résistance électrique convenable, telle qu'une couche en oxyde d'étain dopé au fluor.

L'invention a pour premier objet de fournir une structure à la fois décorée et à couche fonctionnelle, couche chauffante ou couche ayant une propriété de basse émissivité, la structure selon l'invention étant susceptible de garantir l'esthétique et les performances optimales.

A cet effet, l'invention propose une structure comportant :

- un substrat au moins partiellement transparent,
- un élément décoratif à base d'émail sur une face du substrat,
- une couche fonctionnelle, qui est choisie parmi une couche chauffante alimentée électriquement ou une couche basse émissive, la couche étant déposée sur ladite face et couvrant au moins partiellement ledit élément décoratif,

lorsque la couche (3) est choisie chauffante et la structure forme l'un au moins des éléments suivants : une partie vitrée pour étagère chauffante, une façade chauffante pour sèche-serviette ou radiateur, un chauffe-plat, un couvercle de bac à glaces, une partie vitrée de vitrine comptoir alimentaire ou non alimentaire, un couvercle pour coffre réfrigéré, une partie vitrée pour armoire réfrigérée, une partie vitrée d'un élément de réfrigération commerciale ou domestique, un élément chauffant d'aménagement intérieur ou d'équipement électroménager, un élément d'équipement industriel pour l'alimentaire,

lorsque la couche (3') est choisie basse émissive et la structure forme l'un au moins des éléments suivants : un insert de cheminée, un couvercle de bac à glaces, une partie vitrée de vitrine comptoir, un couvercle pour coffre réfrigéré, une partie vitrée pour armoire réfrigérée, une porte pour four, un élément d'aménagement intérieur ou d'équipement électroménager.

La demanderesse a constaté que si ce type de couche fonctionnelle était disposée entre le substrat et le décor, le décor serait dénaturé et/ou les défauts éventuels de la couche seraient révélés à moins de modifier la couche substantiellement (par exemple en réduisant drastiquement son épaisseur) qui perdrait alors sa fonctionnalité.

En disposant la couche fonctionnelle par dessus, l'élément décoratif garde son aspect intact et n'est pas dénaturé en transmission et/ou en réflexion par la présence de la couche. L'esthétique est donc conservée.

Contre toute attente, la couche ainsi déposées sur le décor - qui crée de fait une certaine rugosité - garde sa fonctionnalité même lorsque cette couche est d'épaisseur nettement inférieure à l'épaisseur du décor.

Pour la couche chauffante la continuité électrique est préservée. En outre, lorsque la couche est choisie basse émissive, sa fonctionnalité reste intacte même à l'endroit du décor sous-jacent.

La propriété de basse émissivité sert par exemple pour les couvercles de bacs à glace à maintenir le froid et de retarder l'apparition de condensation en face externe, ou encore dans les inserts de cheminée principalement pour réduire l'encrassement.

La palette de couleurs réalisables reste la même que pour un substrat sans couche. Ceci est particulièrement marquant pour toutes les couleurs claires qui seraient infaisables par-dessus une couche qui donnerait un aspect brun à jaune en transmission selon son épaisseur et sa nature.

En outre, pour les gammes de produits qui nécessitent une adaptation de la résistance de la couche en fonction des spécifications, donc une adaptation de son épaisseur, il est inutile d'adapter la couleur. Par exemple, une façade de radiateur peut être déclinée en plusieurs puissances. En général, il faut plusieurs résistances par carré donc plusieurs épaisseurs de couche pour décliner la gamme, donc l'invention permet d'éviter un ajustement de la couleur du décor nécessaire pour rester homogène si le décor était à l'inverse disposé directement sur la couche.

L'invention permet donc de concevoir des substrats à la fois porteurs d'un décor et d'une couche fonctionnelle, élargissant la gamme de produits réalisables et rendant en outre possible l'obtention de structures plus compactes.

La couche peut être directement sur le décor ou une couche intermédiaire peut être intercalée.

Par ailleurs, la couche chauffante elle-même peut être recouverte par exemple d'une couche isolante électriquement, par exemple un film plastique.

Dans la présente invention, on entend par élément décoratif aussi bien un réseau de motifs géométriques de forme simple - rond, carré, rectangulaire, étoile, losange - ou plus complexe, disposés par exemple en quinconce, qu'un fond continu - recouvrant toute la surface ou une partie de la surface - uni ou multicolore ou encore un dessin.

Cet élément décoratif peut aussi constituer un élément signalétique (repère etc) ou un affichage tel qu'un logo ou un nom commercial, ou encore un élément de masquage (d'élément de fixation, d'assemblage..).

L'élément décoratif peut être coloré, blanc, noir, pastel, translucide, semi-opaque, et/ou opaque.

L'élément décoratif est à base d'émail, ce qui permet de fabriquer rapidement et facilement une structure décorée même à l'échelle industrielle.

Si le substrat est un verre à tremper et/ou si la couche est déposée à haute température par exemple par pyrolyse l'émail peut supporter les températures requises pour la trempe thermique (température maximale de l'ordre de 650°C) et pour ce type de dépôt.

L'émail utile à l'invention peut être toute composition comprenant une fritte de verre éventuellement associée à des pigments (en tant que colorants, ces pigments pouvant faire partie de la fritte), et un médium.

La fritte de verre peut être toute fritte de verre permettant de former finalement une matrice vitreuse sur le support. Pour des considérations de recyclage essentiellement, on préfère une fritte qui ne contient substantiellement pas de plomb.

Le médium assure la mise en suspension correcte des particules solides et permet l'application et l'adhésion temporaire de l'émail sur le verre. Le médium est généralement choisi parmi les organiques tels que l'huile de pin, les terpènes, les huiles minérales, les diluants et les résines.

De préférence, lorsque l'élément décoratif couvre partiellement ladite face, l'épaisseur de l'élément décoratif peut être inférieure ou égale à 20 $\mu$m, de préférence à inférieure ou égale à 10 $\mu$m.

De cette façon, en limitant l'épaisseur, on limite l'effet marche d'escalier.

Plus largement, lorsque la couche est déposée sur un décor avec des reliefs de hauteurs distinctes ou sur un relief et le substrat nu, on veille à ce que le dénivelé soit de préférence inférieur ou égal à 20 $\mu$m, de préférence inférieur ou égal à 10 $\mu$m.

L'élément décoratif peut être réparti uniformément sur toute la surface ou couvrir une ou plusieurs zones en fonction de l'esthétique et/ou des contraintes de visibilité souhaitées.

Plusieurs décors peuvent être juxtaposés ou superposés. Par exemple, un réseau de motifs décoratifs peut être multiple et combiner ainsi plusieurs formes de motifs géométriques, par exemple sous forme de sous réseaux entrecroisés.

De même la largeur du motif peut être variable (par exemple en dégradé avec une largeur décroissante vers le centre pour dégager une zone de visibilité maximum).

L'élément décoratif peut comprendre une partie décorative de couleur claire (blanc inclus) et de préférence la différence en valeur absolue entre l'indice colorimétrique b* de la structure et l'indice colorimétrique b* d'une structure semblable dans laquelle une couche fonctionnelle est disposée entre un substrat et un élément décoratif peut être supérieure ou égale à 1, de préférence supérieure ou égale à 2.

Alternativement ou en combinaison, l'élément décoratif peut comprendre une partie décorative de couleur foncée (noir inclus) et de préférence la structure a un aspect visuel sensiblement uniforme dans ladite partie décorative.

L'élément décoratif peut former une bande, de largeur constante ou variable, par exemple disposée le long d'un bord du substrat, de bords opposés ou même encadrant tout le substrat formant ainsi un bandeau périphérique. L'élément décoratif selon l'invention peut aussi former un rond.

Par ailleurs, la structure peut comprendre un réseau de motifs en émail conducteur en contact avec la couche, disposé entre l'élément décoratif et/ou le substrat et la couche.

Ces motifs en contact avec la couche chauffante permettent la formation de zones chauffantes différenciées même lorsque la couche chauffante couvre entièrement la surface.

Les particules d'argent sont préférées, notamment parce qu'elles présentent un rapport conductivité/coût avantageux. On peut aussi choisir un émail renfermant d'autres particules métalliques plus conductrices que la couche, choisies parmi les particules de nickel, de zinc, de cuivre ou de métaux précieux tels que l'or, le platine, ou le palladium.

Ces motifs peuvent en outre faire partie de l'élément décoratif ou être cachés par ce dernier. On peut ainsi juxtaposer ou superposer des éléments de fonctionnels éventuellement de décor avec des éléments purement décoratifs.

De préférence, l'épaisseur de ces motifs peut être inférieure ou égale à 20 $\mu$m, de préférence à inférieure ou égale à 10 $\mu$m.

Pour son alimentation électrique, la couche chauffante est connectée à des éléments de raccordement électrique aux câbles d'amenée de courant, ces éléments étant appelés pièces de connexion ou cosses d'amenée du courant ou bandes distributrices ou « bus bars » ou encore distributeurs.

La couche choisie chauffante peut être avantageusement alimentée électriquement par des distributeurs à base d'émail conducteur, les distributeurs étant de préférence à base d'argent, distributeurs intercalés entre le substrat ou le décor et la couche.

De préférence, l'épaisseur des distributeurs peut être inférieure ou égale à 20 $\mu$m, de préférence inférieure ou égale à 10 $\mu$m. On veille de préférence à obtenir une densité de courant maximum de l'ordre de 100 A/mm$^2$.

En outre on peut choisir de préférence pour des motifs conducteurs un émail identique à celui utilisé pour les distributeurs pour fabriquer et réaliser en une passe motifs et distributeurs.

La couche choisie chauffante est une couche électriquement conductrice ayant une résistance spécifique donnée R1 pour obtenir la résistance globale donnée variable suivant les applications (fonction de chauffage, anti-condensation..).

On rappelle que la résistance électrique globale R d'un élément chauffant à couche est donnée par la formule suivante :

$$R=R1*D/L$$

dans laquelle D correspond à la dimension de la couche dans le sens du courant et L à la dimension de la couche dans le sens perpendiculaire au courant.

De préférence, la couche chauffante peut présenter une résistivité spécifique entre 10 et 100 ohms.

La couche peut recouvrir entièrement la surface ou être arrangée en une pluralité de zones chauffantes, par exemple des bandes chauffantes avec leur propre alimentation électrique pour des chauffes différenciées. Une seule ou plusieurs des bandes peut recouvrir le décor.

De préférence, la couche basse émissivité peut présenter une résistivité spécifique entre 8 et 50 ohms, de préférence entre 10 et 20 ohms.

La couche peut être de préférence à base d'un oxyde métallique, de préférence d'oxyde d'étain dopé au fluor, ou encore d'oxyde d'indium dopé à l'étain.

La couche d'oxyde d'étain dopé au fluor peut être obtenue de préférence par procédé de pyrolyse (par voie poudre, liquide ou encore plus préférentiellement gazeuse ou CVD). Les couches « pyrolisées » sont avantageuses du fait de leur adhérence, leur stabilité, leur dureté, et donc de leur résistance mécanique et à l'air.

On peut aussi choisir d'autres couches adaptées de la famille des « TCO » (pour transparent conductive oxyde en anglais). Par ailleurs, la couche peut être une multicouche.

On peut envisager d'autres méthodes de dépôts notamment des dépôts par enduction d'une peinture, par « dip-coating », par « spin- coating », par « flow-coating », par pulvérisation « PVD » ....

La couche peut être de préférence une couche transparente. Toutefois, lorsque l'élément décoratif forme un fond continu sombre et/ou lorsqu'une zone de visibilité n'est pas requise, on peut bien sûr choisir une couche chauffante ayant une certaine opacité.

Par ailleurs, le substrat peut être un substrat avec l'une ou les caractéristiques suivantes :

- transparence, par exemple avec une transmission lumineuse d'au moins 60%, voire 80% ou même 90%,
- tenue thermique.

Le substrat peut participer au décor, par exemple être teinté, par exemple le produit nommé « Parsol bronze » vendu par la société SAINT GOBAIN, avoir des zones translucides, dépolies, opaques...

De préférence, le substrat peut être de type verrier, notamment en verre ou en vitrocéramique.

Le verre peut être par exemple silicosodocalcique ou borosilicate, en particulier pour les applications nécessitant une bonne tenue en température (chauffe etc..).

La structure peut être sensiblement plane ou être de forme plus complexe par exemple bombée. Le verre peut être bombé et/ou trempé, et par exemple est d'épaisseur entre 3 et 10 mm.

L'invention peut s'appliquer pour toute forme de substrat (carré, rectangulaire, ronde, ovale, trapézoïdale, semi-circulaire, polygonale...).

Dans un premier mode de réalisation préféré, la couche est choisie chauffante et la structure forme au moins l'un des éléments suivants :

- un élément chauffant d'aménagement intérieur,
- un élément d'équipement électroménager,
- un élément d'équipement de réfrigération commerciale ou domestique,
- un élément d'équipement industriel pour l'alimentaire.

On peut citer en particulier :

- une partie vitrée pour étagère chauffante, une façade chauffante pour sèche-serviette ou radiateur, un chauffe-plat,
- une partie vitrée de vitrine comptoir alimentaire ou non alimentaire,
- un couvercle de bac à glaces, un couvercle pour coffre réfrigéré, une partie vitrée pour armoire réfrigérée.

Dans un deuxième mode de réalisation préféré, la couche est choisie basse émissive et la structure forme au moins l'un des éléments suivants :

- un élément d'aménagement intérieur,
- un élément d'équipement électroménager,
- un élément d'équipement de réfrigération commerciale ou domestique,
- un élément d'équipement industriel pour l'alimentaire.

On peut citer en particulier un insert de cheminée, une porte pour four, une partie vitrée de vitrine comptoir, un couvercle de bac à glaces, un couvercle pour coffre réfrigéré, une partie vitrée pour armoire réfrigérée.

En outre, on peut incorporer sur l'autre face un revêtement sensiblement transparent ou légèrement teinté ayant une autre fonctionnalité par exemple anti-salissures ou encore anti-reflet.

Pour fabriquer la structure décorée, il n'est pas envisageable de réaliser un décor en émail préalablement au dépôt d'une couche sur un vitrage plat avec le procédé actuel de dépôt direct sur ligne float (à chaud).

Par ailleurs, il est difficilement envisageable de réaliser le décor en émail préalablement au dépôt d'une couche en reprise sur ligne magnétron étant donné que ce dépôt se fait directement sur plateau (PLF) c'est-à-dire sur verre de grande dimension. Ce procédé impliquerait de prévoir les positions de découpe et de les modifier à la demande aboutissant donc à un procédé complexe.

Aussi, l'invention a également pour objet un procédé de fabrication de la structure décorée et à couche fonctionnelle simple et fiable, réalisable à l'échelle industrielle.

L'invention propose à cet effet un procédé de fabrication d'une structure décorée telle que décrite précédemment comportant les opérations suivantes successives :

- dimensionnement du substrat,
- sérigraphie dudit élément décoratif à base d'émail,
- dépôt de ladite couche fonctionnelle sur ledit substrat par pyrolyse.
- en un passage dans un four, on réalise les opérations de cuisson d'émail, de dépôt.

Un tel procédé est simple à mettre en oeuvre et présente davantage de souplesse.

De préférence, le procédé peut comprendre une sérigraphie des distributeurs.

De préférence, pour un meilleur rendement et/ou une simplicité de mise en oeuvre, on réalise en un passage dans un four les opérations de cuisson d'émail, de dépôt et une opération de bombage et trempe ou de trempe.

Dans un mode de réalisation avantageux, la pyrolyse est par voie gazeuse (CVD).

Cela confère une meilleure uniformité à la couche, ce qui est nécessaire notamment lorsqu'une zone de visibilité est requise.

D'autres détails et caractéristiques avantageuses de l'invention apparaissent à la lecture des exemples de dispositifs illustrés par les figures suivantes :

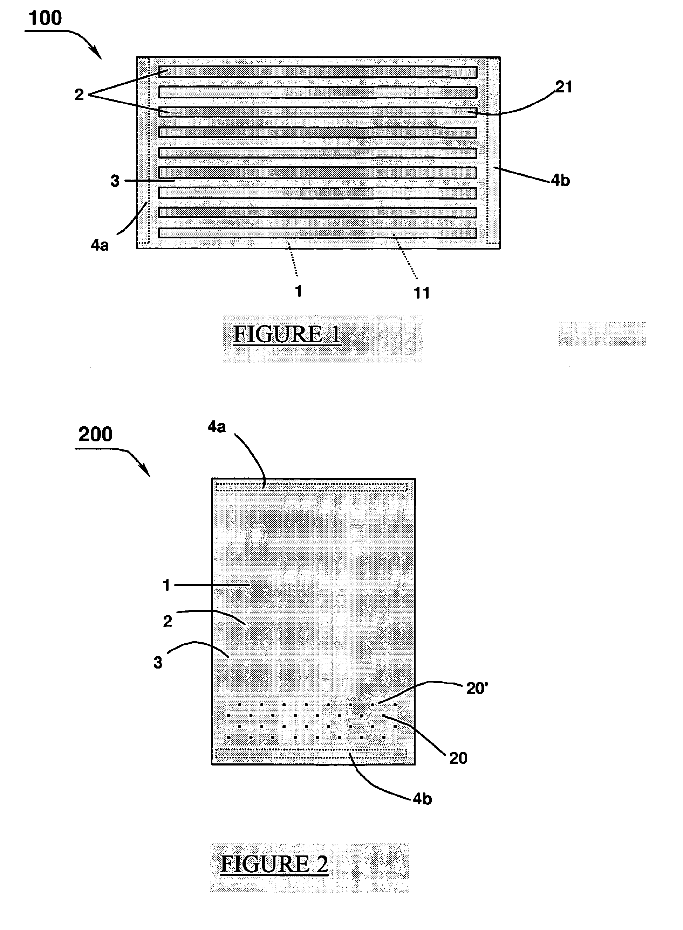

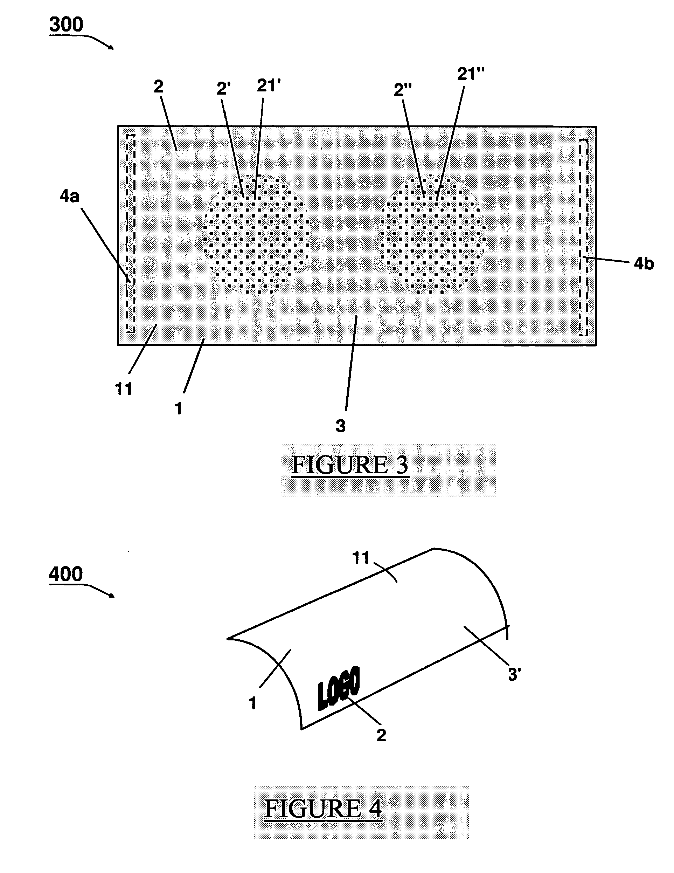

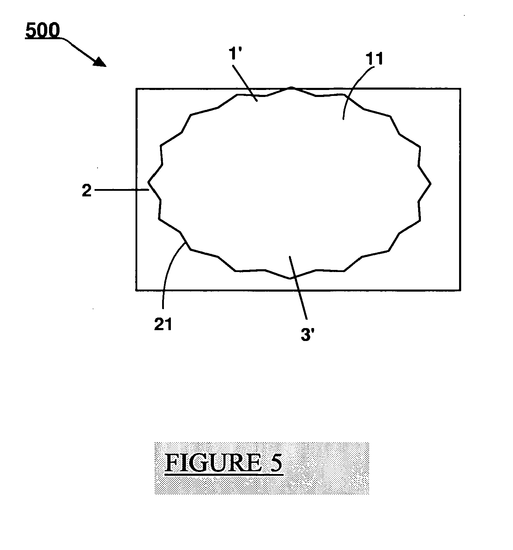

■ la figure 1 représente schématiquement une vue de face d'une façade de radiateur décoré dans un premier mode de réalisation de l'invention ;
■ la figure 2 est une représente schématiquement une vue de face façade de sèche serviette décoré dans un deuxième mode de réalisation de l'invention ;
■ la figure 3 représente schématiquement une vue de face d'un chauffe plat décoré dans un troisième mode de réalisation de l'invention ;
■ la figure 4 est représente schématiquement une vue en perspective d'un couvercle de bac à glace décoré dans un quatrième mode de réalisation de l'invention ;
■ la figure 5 représente schématiquement une vue de face d'un insert de cheminée décoré dans un cinquième mode de réalisation de l'invention.

On précise tout d'abord que par souci de clarté toutes les figures ne respectent pas rigoureusement les proportions entre les divers éléments représentés et que les éléments apparaissant en transparence sont représentés en traits continus et les éléments cachés sont en traits pointillés.

EXEMPLE N° 1

La figure 1 représente schématiquement une vue de face (c'est-à-dire côté face avant 11) d'une façade de radiateur décoré 100 dans un premier mode de réalisation de l'invention.

La façade de radiateur 100 est composée d'une feuille de verre silicosodocalcique 1 de 4 mm d'épaisseur dotée sur sa face arrière :

- d'un décor 2 en émail bleu clair sous forme de bandes rectangulaires 21 parallèles aux bords longitudinaux de la feuille de verre 1,
- d'un élément chauffant composé d'une couche d'oxyde d'étain 3 dopée au fluor déposée par voie CVD couvrant cette face par dessus le décor,
- deux bandes en pâte d'argent et sérigraphiées formant distributeurs 4a, 4b, déposées sur le verre et optionnellement sur le décor le long des bords latéraux de la feuille de verre 1, ces distributeurs étant connectés à des câbles électriques (non représentés) et cachés par un entourage (non représenté).

Le décor 2 et les distributeurs 4a, 4b ont chacun une épaisseur de 10 $\mu$m d'épaisseur pour éviter de créer une « marche d'escalier» trop importante.

On ajuste les dosages nécessaires pour réaliser la couche avec la bonne résistance globale sachant ces dosages diffèrent par rapport au dépôt direct sur verre. La couche se comporte différemment en raison de la rugosité plus importante sur l'émail décoratif comparée à celle du verre, il est donc nécessaire d'ajuster les dosages pour obtenir la même résistance par carré sur un émail et donc la bonne résistance globale.

Ainsi, la distance entre les distributeurs étant de 700 mm et la longueur de 500 mm, la résistance spécifique de la couche est adaptée à 93 ohms pour obtenir une température de chauffe théorique de 80°C. Ces données d'entrée sont répertoriées dans le tableau 1 a ci-après.

Tableau 1a

| Données d'entrée | Exemple n°1 |
|---|---|
| Température de chauffe visée : | 80°C |
| Résistance globale visée | 126 ohms |
| Tension d'alimentation : | 230 V |
| Dimensions | 700*500 mm |
| Couleur du décor | Bleu clair |

On obtient les caractéristiques de chauffe souhaitées ainsi que la couleur bleue. Ces données de sortie sont répertoriées dans le tableau 1 b ci-après. A titre comparatif, si cette couche était dessous le décor, l'aspect serait verdâtre du fait du jaunissement.

Tableau 1b

| Données de sortie | Exemple n°1 |
|---|---|
| Résistance spécifique | 93 ohms |
| Puissance obtenue | 420 W |
| Couleur en transmission (zones du décor) | Bleu clair |

Pour fabriquer la façade de radiateur 100 on dimensionne le verre 1, on réalise la sérigraphie du décor 2 et des distributeurs 4, et dans un four on réalise la cuisson des émaux, le dépôt par CVD de la couche 3 et une trempe.

EXEMPLE N°2

La figure 2 représente schématiquement une vue de face d'une façade de sèche serviette décorée 200 dans un deuxième mode de réalisation de l'invention.

Cette façade de sèche-serviette 200 est composée d'une feuille de verre silicosodocalcique 1 de 4 ou 6 mm d'épaisseur dotée sur sa face arrière :

- d'un décor 2 sous forme d'un fond continu blanc couvrant la surface,
- d'un élément chauffant composé d'une couche d'oxyde d'étain 3 dopée au fluor et couvrant cette face par dessus le décor,
- deux bandes à la pâte d'argent et sérigraphiées formant distributeurs 4a, 4b, déposées sur le décor 2 et sous la couche 3 le long des bords latéraux de la feuille de verre 1, ces distributeurs étant connectés à des câbles électriques (non représentés) et cachés par un entourage (non représenté).

Après montage, cette façade de sèche-serviette 200 est par exemple verticale. Cette façade chauffante peut être complétée par une barre ajustée à la hauteur désirée afin de supporter une serviette. Cette façade peut aussi servir telle quelle de façade chauffante de radiateur.

En outre, afin d'obtenir des zones de chauffe différenciées, un réseau 20 de plots 20' en émail à base d'argent est disposé dans la partie basse entre le décor 2 et la couche 3. Les plots 20' sont disposés en quinconce pour éviter les points chauds. Leur diamètre est de l'ordre du millimètre. Avec un tel réseau, le courant n'est pas dévié et le chauffage reste sensiblement homogène dans chaque zone.

Les plots d'argent 20' et les distributeurs 4a, 4b ont chacun de préférence une épaisseur de 10 $\mu$m d'épaisseur.

Le réseau 20 est disposé dans la partie inférieure du sèche-serviette 200 pour augmenter dans cette zone la température de chauffe, ce qui permet de compenser sensiblement l'écart de température.

Toute chose égale par ailleurs, en l'absence de ce réseau, l'écart de température lié à l'effet de convection naturelle serait de l'ordre de 15°C (80°C pour la partie supérieure, 65°C pour la partie inférieure).

On ajuste donc le taux de couverture - correspondant à la surface totale de tous les motifs sur la surface totale occupée par le réseau de motifs - en fonction de la résistance spécifique équivalente souhaitée.

La largeur de la zone inférieure contenant le réseau 20 est de 0,28 mm et sa résistance spécifique est adaptée à 42 ohms au lieu de 51 ohms pour une couche qui donnerait une température de chauffe de 80°C sans tenir compte de la convection naturelle.

La largeur de la zone supérieure est de 0,70 mm et sa résistance spécifique est adaptée à 60 ohms.

Aussi, à partir de données d'entrée que sont la tension d'alimentation à 230 V, les dimensions du verre à 1000x400 mm et une température homogène souhaitée égale à 70°C environ sur toute la surface, on a réalisé grâce à l'invention la façade du sèche-serviette 200 correspondant avec une température réelle sur toute la surface de 70°C, en adaptant (diminuant) la résistance spécifique équivalente par ajout des motifs conducteurs judicieusement positionnés dans la zone basse ainsi qu'en ajustant la résistance spécifique de la zone non modifiée haute. Les données d'entrée principales sont répertoriées dans le tableau 2a ci-après.

Les performances sont obtenues en gardant une grande liberté dans le choix de l'esthétique. Dans une variante, ces motifs 20' peuvent être visibles et participer ainsi au décor.

Tableau 2a

| Données d'entrée | Exemple n°2 |
|---|---|
| Température réelle sur la surface | 70°C |
| Tension d'alimentation : | 230V |
| Dimensions | 1000 x 400 mm |
| Couleur décor | blanc |

Tableau 2b

| Données de sortie | Exemple n°2 |
|---|---|
| Température théorique de chauffe (zone supérieure) | 65°C |
| Résistance spécifique (zone supérieure) | 60 ohms |
| Température théorique de chauffe (zone inférieure) | 80°C |
| Résistance spécifique (zone inférieure) | 42 ohms |
| Couleur en transmission (zones du décor) | blanc |

On obtient les caractéristiques de chauffe souhaitées ainsi que le fond blanc. Ces données de sortie sont répertoriées dans le tableau 2b. A titre comparatif, si cette couche était dessous le décor, l'aspect serait jaunâtre.

Pour fabriquer cette façade 200 on dimensionne le verre 1, on réalise la sérigraphie du décor 2, puis celle des distributeurs 4a, 4b et du réseau 20 et dans un four on réalise la cuisson des émaux, le dépôt par CVD de la couche 3 et une trempe.

EXEMPLE N°3

La figure 3 représente schématiquement une vue de face d'un chauffe-plat décoré 300 dans un troisième mode de réalisation de l'invention.

Le chauffe-plat 300 est constitué d'un verre rectangulaire 1 sur lequel est déposé sur sa face arrière :

- un décor 2 sous forme d'un fond continu à base d'émail gris laissant toutefois des parties nues rondes qui vont former des ronds centrés et chauffants pour maintenir des plats cuisinés ou des aliments au chaud,
- deux bandes à la pâte d'argent et sérigraphiées formant distributeurs 4a, 4b placées le long des bords latéraux de la feuille de verre 1 et connectées à des câbles électriques (non représentés) et cachés par un entourage (non représenté),
- deux réseaux 2', 2" de plots d'émail à base d'argent 21', 21" par exemple identiques, ces réseaux étant disposés dans les ronds chauffants,
- un élément chauffant composé d'une couche d'oxyde d'étain 3 dopée au fluor déposée sur cette face par dessus le décor, les réseaux et les distributeurs.

Le décor 2, les plots d'argent 21', 21" et les distributeurs 4a, 4b ont chacun une épaisseur de 10 $\mu$m.

Dans la zone des ronds chauffants, la résistance spécifique équivalente chute à 31 ohms avec un taux de couverture de 51%.

Dans la zone non fonctionnelle, la résistance spécifique de la couche 3 est choisie égale à 62 ohms.

Aussi, à partir de données d'entrée que sont la tension d'alimentation à 230 V, un diamètre de ronds de 200 mm, une distance entre distributeurs de 800 mm, les températures souhaitées égales à 80°C dans la zone non fonctionnelle et 120°C dans les zones fonctionnelles, on a réalisé le chauffe-plat 400 correspondant sans sacrifier l'esthétique, en adaptant (diminuant) la résistance spécifique équivalente par ajout de motifs conducteurs appropriés dans des zones fonctionnelles ainsi qu'en choisissant la résistance spécifique de la zone non fonctionnelle sans motifs. Les données d'entrée principales sont répertoriées dans le tableau 3a ci-après.

Dans une variante, ces motifs 21', 21" peuvent être invisibles par exemple en réalisant des motifs gris identiques lors de la formation du fond gris.

Tableau 3a

| Données d'entrée | Exemple 3 |
|---|---|
| Température visée (zones des ronds chauffants) | 120°C |
| Température visée (hors zones des ronds chauffants) | 80°C |
| Tension d'alimentation : | 230V |
| Dimensions | 200 mm x 800 mm |
| Couleur décor principal | gris |

Tableau 3b

| Données de sortie | Exemple 3 |
|---|---|
| Résistance spécifique (zones des ronds chauffants) | 31 ohms |
| Résistance spécifique (hors zones des ronds chauffants) | 62 ohms |
| Couleur en transmission du fond | gris |

On obtient les caractéristiques de chauffe souhaitées ainsi que l'esthétique recherchée à savoir un fond foncé d'aspect visuel sensiblement uniforme et des ronds chauffants visibles (cf. tableau 3b). A titre comparatif, si cette couche était dessous le décor, les défauts de la couche seraient révélés.

Pour fabriquer cette façade 300 on dimensionne le verre 1, on réalise la sérigraphie du décor 2, puis celle des distributeurs 4a, 4b et des réseaux 2', 2" et dans un four on réalise la cuisson des émaux, le dépôt par CVD de la couche 3 et une trempe.

Il est également possible de concevoir une étagère chauffante avec des températures variables en fonction du type d'aliment à maintenir au chaud ou bien en fonction de la géométrie chauffante souhaitée.

EXEMPLE N°4

La figure 4 représente schématiquement une vue en perspective (côté face avant 11) d'un couvercle de bac à glace décoré dans un quatrième mode de réalisation de l'invention.

Ce couvercle 400 est composé d'une feuille de verre silicosodocalcique 1 de 4 mm d'épaisseur dotée sur sa face arrière :

- d'un décor 2 en émail blanc sous forme d'un logo - ou dans une variante un affichage signalétique ou un nom commercial,
- d'une couche basse émissive qui est de préférence d'oxyde d'étain 3' dopée au fluor déposée par dessus le décor et couvrant la totalité de cette face.

La résistance spécifique de la couche 3' est choisie de préférence égale à 10 ohms.

Tableau 4

| Données de sortie | Décor sur la couche Exemple n°4 | Décor sous la couche Exemple comparatif |
|---|---|---|
| Couleur en transmission | blanc | jaune |
| L* | 73.26 | 64.08 |
| a* | -2.43 | -2.46 |
| b* | 1.04 | 4.35 |
| DE* | 9.75 | |

Les données sur l'esthétique définies à partir de l'espace couleur L* (clarté), et des indices a*, b* et DE* sont présentées pour l'exemple 4 et pour un exemple comparatif pour lequel le décor est sous la couche dans le tableau 4 ci-dessus.

Si cette couche est dessous le décor, l'aspect du logo est jaunâtre. La différence en valeur absolue entre l'indice colorimétrique b* de la structure de l'exemple 4 et l'indice colorimétrique b* de l'exemple comparatif est égale à 3,31. On observe en outre en regard du logo de la condensation.

On obtient les caractéristiques de maintien du froid et de retard à la condensation souhaitées ainsi que l'esthétique recherchée à savoir du blanc.

Pour fabriquer ce couvercle 400 on dimensionne le verre 1, on réalise la sérigraphie du décor 2, puis dans un four on réalise la cuisson de l'émail 2, le dépôt par CVD de la couche 3', un bombage et une trempe.

On peut, en variante, rajouter une sérigraphie de distributeurs et éventuellement des réseaux conducteurs dans la partie basse afin d'obtenir un couvercle chauffant électrique encore plus efficace contre la condensation, pour des ambiances chaudes et humides.

EXEMPLE N°5

La figure 5 est représente schématiquement une vue de face (côté face avant 11) d'un insert de cheminée décoré 500 dans un cinquième mode de réalisation de l'invention.

Cet insert 500 est composé d'une plaque vitrocéramique 1' de 4 mm d'épaisseur dotée sur sa face arrière :

- d'un décor 2 sous forme d'un bandeau périphérique 21 en émail brun,
- d'une couche basse émissive qui est de préférence d'oxyde d'étain 3' dopée au fluor déposée par dessus le décor 2 et couvrant la totalité de cette face.

La résistance spécifique de la couche 3' est choisie égale à 10 ohms.

On obtient une température de surface sur la face arrière suffisamment élevée pour réduire très fortement les suies (effet anti-encrassement) ainsi que l'esthétique recherchée à savoir un bandeau de couleur foncé d'aspect visuel sensiblement uniforme. A titre comparatif, si cette couche était dessous le décor, les défauts de la couche seraient révélés et en outre la suie resterait fixée sur ce bandeau.

Pour fabriquer cet insert 500 on dimensionne la vitrocéramique 1', on réalise la sérigraphie du décor 2, puis dans un four on réalise la cuisson de l'émail 2, le dépôt par CVD de la couche 3'.

**Revendications**

1. Structure décorée (100 à 500) comportant :

   - un substrat (1, 1') au moins partiellement transparent,
   - un élément décoratif (2, 2', 2") à base d'émail sur une face du substrat,
   - une couche fonctionnelle (3, 3') qui est choisie parmi une couche chauffante alimentée électriquement ou une couche basse émissive, la couche étant déposée sur ladite face et couvrant au moins partiellement ledit élément décoratif,

   dans laquelle :

   - la couche (3) est chauffante et la structure forme l'un au moins des éléments suivants : une partie vitrée pour étagère chauffante, une façade chauffante pour sèche-serviette ou radiateur, un chauffe-plat, un couvercle de bac à glaces, une partie vitrée de vitrine comptoir alimentaire ou non alimentaire, un couvercle pour coffre réfrigéré, une partie vitrée pour armoire réfrigérée, une partie vitrée d'un élément de réfrigération commerciale ou domestique, un élément chauffant d'aménagement intérieur ou d'équipement électroménager, un élément d'équipement industriel pour l'alimentaire ou
   - la couche (3') est basse émissive et la structure forme l'un au moins des éléments suivants : un insert de cheminée, un couvercle de bac à glaces, une partie vitrée de vitrine comptoir, un couvercle pour coffre réfrigéré, une partie vitrée pour armoire réfrigérée, une porte pour four, un élément d'aménagement intérieur ou d'équipement électroménager.

2. Structure décorée (100 à 500) selon la revendication 1 **caractérisée en ce que**, lorsque l'élément décoratif (2 à 2") couvre partiellement ladite face, l'épaisseur de l'élément décoratif est inférieure ou égale à 20 $\mu$m, de préférence à inférieure ou égale à 10 $\mu$m.

3. Structure décorée (100 à 400) selon l'une des revendications 1 ou 2 **caractérisée en ce que** l'élément décoratif comprend une partie décorative claire (2, 2', 2") et de préférence la différence en valeur absolue entre l'indice colorimétrique b* de la structure et l'indice colorimétrique b* d'une structure semblable dans laquelle une couche fonctionnelle est disposée entre un substrat et un élément décoratif est supérieure ou égale à 1, de préférence supérieure ou égale à 2.

4. Structure décorée (300, 500) selon l'une des revendications 1 à 3 **caractérisée en ce que** l'élément décoratif (2, 2') comprend une partie décorative sombre et de préférence la structure a un aspect visuel sensiblement uniforme dans ladite partie décorative.

5. Structure décorée (500) selon l'une des revendications 1 à 4 **caractérisée en ce que** l'élément décoratif comprend un bandeau périphérique (2').

6. Structure décorée (200) selon l'une des revendications 1 à 4 **caractérisée en ce que** l'élément décoratif (2) couvre sensiblement ladite face.

7. Structure décorée (200, 300) selon l'une des revendications 1 à 6 **caractérisée en ce que** la structure comprend un réseau de motifs (20, 2', 2") en émail conducteur en contact avec la couche (3).

8. Structure décorée (100 à 300) selon l'une des revendications 1 à 7 **caractérisée en ce que** la couche choisie chauffante (3) est alimentée électriquement par des distributeurs à base d'émail conducteur, qui sont de préférence à base d'argent.

9. Structure décorée (100 à 300) selon l'une des revendications 1 à 8 **caractérisée en ce que** la couche choisie chauffante (3) présente une résistivité spécifique entre 10 et de 100 ohms.

10. Structure décorée (400, 500) selon l'une des revendications 1 à 8 **caractérisée en ce que** la couche choisie basse émissive (3') présente une résistivité spécifique entre 8 et 50 ohms, de préférence entre 10 et 20 ohms.

11. Structure décorée (100 à 500) selon l'une des revendications 1 à 10 **caractérisée en ce que** la couche (3, 3') est transparente.

**12.** Structure décorée (100 à 500) selon l'une des revendications 1 à 11 **caractérisée en ce que** la couche (3, 3') est à base d'oxyde métallique, de préférence en oxyde d'étain dopé fluor.

**13.** Structure décorée (100 à 500) selon l'une des revendications 1 à 12 **caractérisée en ce que** le substrat (1, 1') est un verre ou une vitrocéramique.

**14.** Structure décorée (100 à 500) selon l'une des revendications 1 à 13 **caractérisée en ce que** le substrat est bombé et/ou trempé.

**15.** Procédé de fabrication d'une structure décorée (100 à 500) selon l'une des revendications 1 à 14 **caractérisé en ce qu'**il comprend les opérations suivantes successives :

- dimensionnement du substrat (1, 1'),
- sérigraphie dudit élément décoratif (2 à 2") à base d'émail,
- dépôt de ladite couche fonctionnelle (3, 3') sur ledit substrat par pyrolyse, et **en ce que** en un passage dans un four, on réalise les opérations de cuisson d'émail, de dépôt.

**16.** Procédé de fabrication d'une structure décorée selon la revendication 15 **caractérisé en ce que**, en un passage dans un four, on réalise les opérations de cuisson d'émail, de dépôt et une opération de bombage - trempe ou de trempe.

**17.** Procédé de fabrication d'une structure décorée selon l'une des revendications 15 ou 16 **caractérisé en ce que** la pyrolyse est par voie gazeuse.

**18.** Procédé de fabrication d'une structure décorée selon l'une des revendications 15 à 17 **caractérisé en ce qu'**il comprend une sérigraphie des distributeurs.

**Claims**

**1.** A decorated structure (100 to 500) comprising:

- an at least partially transparent substrate (1, 1'),
- an enamel-based decorative element (2, 2', 2") on one face of the substrate,
- a functional layer (3, 3') that is chosen from an electrically supplied heating layer or a low-emissive layer, the layer being deposited on said face and at least partially covering said decorative element,

in which:

- the layer (3) is chosen to be heating and the structure forms at least one of the following elements: a glazed portion for a heating shelf, a heating façade for a towel drier or radiator, a plate warmer, an ice-cube tray cover, a glazed portion of a foodstuff or nonfoodstuff counter showcase, a cover for a refrigerated chest, a glazed portion for a refrigerated cupboard, a glazed portion of a commercial or domestic refrigeration element, a heating element of an indoor installation or household electrical equipment, an industrial equipment element for foodstuffs, or
- the layer (3') is chosen to be low-emissive and the structure forms at least one of the following elements: a fireplace insert, an ice-cube tray cover, a glazed portion of a counter showcase, a cover for a refrigerated chest, a glazed portion for a refrigerated cupboard, a stove door, an element of an indoor installation or household electrical equipment

**2.** The decorated structure (100 to 500) as claimed in claim 1, **characterized in that**, when the decorative element (2 to 2") partially covers said face, the thickness of the decorative element is less than or equal to 20 $\mu$m, preferably less than or equal to 10 $\mu$m.

**3.** The decorated structure (100 to 400) as claimed in one of claims 1 or 2, **characterized in that** the decorative element comprises a light-colored decorative portion (2, 2', 2") and preferably the difference in absolute value between the colorimetric index b* of the structure and the colorimetric index b* of a similar structure in which a functional layer is placed between a substrate and a decorative element is greater than or equal to 1, preferably greater than or equal to 2.

4. The decorated structure (300, 500) as claimed in one of claims 1 to 3, **characterized in that** the decorative element (2, 2') comprises a dark-colored decorative portion and preferably the structure has a substantially uniform visual appearance in said decorative portion.

5. The decorated structure (500) as claimed in one of claims 1 to 4, **characterized in that** the decorative element comprises a peripheral strip (2').

6. The decorated structure (200) as claimed in one of claims 1 to 4, **characterized in that** the decorative element (2) substantially covers said face.

7. The decorated structure (200, 300) as claimed in one of claims 1 to 6, **characterized in that** the structure comprises a network of patterns (20, 2', 2") made of conductive enamel in contact with the layer (3).

8. The decorated structure (100 to 300) as claimed in one of claims 1 to 7, **characterized in that** the chosen heating layer (3) is electrically supplied by conductive enamel-based distributors that are preferably silver-based.

9. The decorated structure (100 to 300) as claimed in one of claims 1 to 8, **characterized in that** the chosen heating layer (3) has a specific resistance of between 10 and 100 ohms.

10. The decorated structure (400, 500) as claimed in one of claims 1 to 8, **characterized in that** the chosen low-emissive layer (3') has a specific resistance of between 8 and 50 ohms, preferably of between 10 and 20 ohms.

11. The decorated structure (100 to 500) as claimed in one of claims 1 to 10, **characterized in that** the layer (3, 3') is transparent.

12. The decorated structure (100 to 500) as claimed in one of claims 1 to 11, **characterized in that** the layer (3, 3') is metal oxide-based, preferably made of fluorine-doped tin oxide.

13. The decorated structure (100 to 500) as claimed in one of claims 1 to 12, **characterized in that** the substrate (1, 1') is a glass or a glass-ceramic.

14. The decorated structure (100 to 500) as claimed in one of claims 1 to 13, **characterized in that** the substrate is bent and/or toughened.

15. A method for manufacturing a decorated structure (100 to 500) as claimed in one of claims 1 to 14, **characterized in that** it comprises the following successive operations:

   - dimensioning of the substrate (1, 1'),
   - screenprinting of said enamel-based decorative element (2 to 2"),
   - the deposition of said functional layer (3, 3') on said substrate by pyrolysis,

and **in that**, in one stoving process, the enamel stoving and deposition operations are carried out.

16. The method for manufacturing a decorated structure as claimed in claim 15, **characterized in that**, in one stoving process, the enamel stoving and deposition operations and a bending-toughening or toughening operation are carried out.

17. The method for manufacturing a decorated structure as claimed in one of claims 15 or 16, **characterized in that** the pyrolysis is by gaseous means.

18. The method for manufacturing a decorated structure as claimed in claims 15 to 17, **characterized in that** it comprises a screenprinting of the distributors

**Patentansprüche**

1. Verzierte Struktur (100 bis 500) umfassend:

   - ein wenigstens teilweise transparentes Substrat (1, 1'),
   - ein Zierelement (2, 2', 2") auf Emailbasis auf einer Seite des Substrats,
   - eine Funktionsschicht (3, 3'), die aus einer elektrisch versorgten Heizschicht oder einer niedrig emittierenden Schicht ausgewählt ist, wobei die Schicht auf die Seite aufgetragen ist und das Zierelement wenigstens teilweise bedeckt,

   wobei:

   - die Schicht (3) eine Heizschicht ist und die Struktur wenigstens eines der folgenden Elemente bildet, nämlich ein Glasteil für ein beheiztes Etagengestell, eine Heizvorderseite für einen Handtuchtrockner oder Heizkörper, eine Warmhalteplatte, einen Eisbehälterdeckel, ein Glasteil einer Thekenvitrine für Lebensmittel oder nicht für Lebensmittel, einen Deckel für einen Kühlbehälter, ein Glasteil für einen Kühlschrank, ein Glasteil eines Geschäfts- oder Haushaltskühlelements, ein Heizelement für Inneneinrichtung oder Haushaltselektrogeräte, ein gewerbliches Einrichtungselement für den Lebensmittelbereich oder
   - die Schicht (3') niedrig emittierend ist und die Struktur wenigstens eines der folgenden Elemente bildet, nämlich einen Kamineinsatz, einen Eisbehälterdeckel, ein Glasteil einer Thekenvitrine, einen Deckel für einen Kühlbehälter, ein Glasteil für einen Kühlschrank, eine Ofentür, ein Element für Inneneinrichtung oder Haushaltselektrogeräte.

2. Verzierte Struktur (100 bis 500) nach Anspruch 1, **dadurch gekennzeichnet, dass**, wenn das Zierelement (2 bis 2") die Seite teilweise bedeckt, die Dicke des Zierelements kleiner oder gleich 20 $\mu$m, vorzugsweise kleiner oder gleich 10 $\mu$m ist.

3. Verzierte Struktur (100 bis 400) nach einem der Ansprüche 1 oder 2, **dadurch gekennzeichnet, dass** das Zierelement ein helles Zierteil (2, 2', 2") umfasst und vorzugsweise der Unterschied hinsichtlich des Absolutwertes zwischen der Farbzahl b* der Struktur und der Farbzahl b* einer ähnlichen Struktur, bei der eine Funktionsschicht zwischen einem Substrat und einem Zierelement angeordnet ist, größer oder gleich 1, vorzugsweise größer oder gleich 2 ist.

4. Verzierte Struktur (300, 500) nach einem der Ansprüche 1 bis 3, **dadurch gekennzeichnet, dass** das Zierelement (2, 2') ein dunkles Zierteil umfasst und vorzugsweise die Struktur eine im Wesentlichen gleichmäßige Optik in dem Zierteil hat.

5. Verzierte Struktur (500) nach einem der Ansprüche 1 bis 4, **dadurch gekennzeichnet, dass** das Zierelement ein umlaufendes Band (2') umfasst.

6. Verzierte Struktur (200) nach einem der Ansprüche 1 bis 4, **dadurch gekennzeichnet, dass** das Zierelement (2) die Seite im Wesentlichen bedeckt.

7. Verzierte Struktur (200, 300) nach einem der Ansprüche 1 bis 6, **dadurch gekennzeichnet, dass** die Struktur ein Netz aus mit der Schicht (3) in Kontakt befindlichen Motiven (20, 2', 2") aus leitfähigem Email umfasst.

8. Verzierte Struktur (100 bis 300) nach einem der Ansprüche 1 bis 7, **dadurch gekennzeichnet, dass** die gewählte Heizschicht (3) durch Verteiler auf der Basis von leitfähigem Email, die vorzugsweise silberbasiert sind, elektrisch versorgt wird.

9. Verzierte Struktur (100 bis 300) nach einem der Ansprüche 1 bis 8, **dadurch gekennzeichnet, dass** die gewählte Heizschicht (3) einen spezifischen Widerstand zwischen 10 und 100 Ohm aufweist.

10. Verzierte Struktur (400, 500) nach einem der Ansprüche 1 bis 8, **dadurch gekennzeichnet, dass** die gewählte niedrig emittierende Schicht (3') einen spezifischen Widerstand zwischen 8 und 50 Ohm, vorzugsweise zwischen 10 und 20 Ohm aufweist.

11. Verzierte Struktur (100 bis 500) nach einem der Ansprüche 1 bis 10, **dadurch gekennzeichnet, dass** die Schicht (3, 3') transparent ist.

**12.** Verzierte Struktur (100 bis 500) nach einem der Ansprüche 1 bis 11, **dadurch gekennzeichnet, dass** die Schicht (3, 3') metalloxidbasiert ist, vorzugsweise aus fluordotiertem Zinnoxid besteht.

**13.** Verzierte Struktur (100 bis 500) nach einem der Ansprüche 1 bis 12, **dadurch gekennzeichnet, dass** das Substrat (1, 1') ein Glas oder eine Glaskeramik ist.

**14.** Verzierte Struktur (100 bis 500) nach einem der Ansprüche 1 bis 13, **dadurch gekennzeichnet, dass** das Substrat gewölbt und/oder gehärtet ist.

**15.** Verfahren zur Herstellung einer verzierten Struktur (100 bis 500) nach einem der Ansprüche 1 bis 14, **dadurch gekennzeichnet, dass** es die folgenden aufeinanderfolgenden Arbeitsschritte umfasst:

- Dimensionieren des Substrats (1, 1'),
- Serigraphieren des Zierelements (2 bis 2") auf Emailbasis,
- Abscheiden der Funktionsschicht (3, 3') auf dem Substrat mittels Pyrolyse,

und dass in einem Durchgang in einem Ofen die Schritte des Emailbrennens, Abscheidens vollzogen werden.

**16.** Verfahren zur Herstellung einer verzierten Struktur nach Anspruch 15, **dadurch gekennzeichnet, dass** in einem Durchgang in einem Ofen die Schritte des Emailbrennens, des Abscheidens sowie ein Wölbungs-Härtungs- oder Härtungs-Schritt durchgeführt werden bzw. wird.

**17.** Verfahren zur Herstellung einer verzierten Struktur nach einem der Ansprüche 15 oder 16, **dadurch gekennzeichnet, dass** die Pyrolyse auf gasförmigem Weg erfolgt.

**18.** Verfahren zur Herstellung einer verzierten Struktur nach einem der Ansprüche 15 bis 17, **dadurch gekennzeichnet, dass** es ein Serigraphieren der Verteiler umfasst.

**100**

**FIGURE 1**

**200**

**FIGURE 2**

**300**

## FIGURE 3

**400**

## FIGURE 4

**FIGURE 5**